# EUROPÄISCHE PATENTSCHRIFT

(11) **EP 3 227 534 B1**
(45) Veröffentlichungstag und Bekanntmachung des Hinweises auf die Patenterteilung: **12.12.2018**
(21) Anmeldenummer: 15777938.0
(22) Anmeldetag: 08.10.2015
(51) Int. Cl.: F01K 23/06, F01K 23/10, F22B 1/18

(54) **VERFAHREN ZUM BETRIEB EINER ABWÄRMENUTZUNGSANORDNUNG**
METHOD FOR OPERATING AN ARRANGEMENT FOR USING WASTE HEAT
PROCÉDÉ DE FONCTIONNEMENT D'UN DISPOSITIF D'UTILISATION DE CHALEUR DISSIPÉE

(30) Priorität: 05.12.2014 DE 102014225059
(43) Veröffentlichungstag der Anmeldung: 11.10.2017
(73) Patentinhaber: Robert Bosch GmbH, 70442 Stuttgart (DE)
(72) Erfinder: ROEHNER, Marc Oliver, 69124 Heidelberg (DE); VIERECK, Markus, 70469 Stuttgart (DE); MATTER, Maren, 70565 Stuttgart (DE); CAKALLIK, Derya, 71277 Rutesheim (DE); THORINGTON, Matthew, 70191 Stuttgart (DE)
(86) Internationale Anmeldenummer: PCT/EP2015/073303
(87) Internationale Veröffentlichungsnummer: WO 2016/087096

(56) Entgegenhaltungen:
- DE-A1-102011 076 405
- DE-A1-102012 221 153

## Beschreibung

Die Erfindung betrifft ein Verfahren zum Betrieb einer Abwärmenutzungsanordnung, wobei erfindungsgemäß eine Leckage eines Arbeitsmediums in einen Abgaskanal ermittelt wird.

### Stand der Technik

Abwärmenutzungsanordnungen von Brennkraftmaschinen sind aus dem Stand der Technik bekannt, wie beispielsweise aus den Offenlegungsschriften DE 10 2012 221 153 A1 und DE 10 2011 076 405 A1. Die bekannte Abwärmenutzungsanordnung von der DE 10 2011 076 405 A1 umfasst einen ein Arbeitsmedium führenden Kreislauf, wobei in dem Kreislauf in Flussrichtung des Arbeitsmediums eine Pumpe, ein Verdampfer, eine Expansionsmaschine und ein Kondensator angeordnet sind. Der Verdampfer ist ebenso in einem Abgaskanal der Brennkraftmaschine angeordnet, so dass er ein von der Brennkraftmaschine ausgestoßenes Abgas als Wärmequelle verwenden kann.

Im bekannten Verfahren zum Betrieb einer Abwärmenutzungsanordnung ist offenbart, dass es zu einer Leckage des verdampften Arbeitsmediums im Verdampfer kommen kann. Die Leckage führt zum einen zu einem großen Bedarf an Arbeitsmedium, zum anderen können unerwünschte Effekte, wie beispielsweise ein unkontrolliertes Verbrennen des Arbeitsmediums, auftreten.

### Offenbarung der Erfindung

Die erfindungsgemäßen Verfahren werden in den unabhängigen Ansprüchen 1 und 10 beschrieben. Das erfindungsgemäße Verfahren soll nun die Ermittlung der Leckage des Arbeitsmediums verbessern, wobei eine Leckage von sowohl flüssigem als auch verdampftem Arbeitsmedium detektiert werden soll, und in Weiterbildungen auch einen Rückführkanal des Abgases berücksichtigen, in welchem der Verdampfer oder ein weiterer Verdampfer angeordnet ist. Damit weist das erfindungsgemäße Verfahren zum Betrieb einer Abwärmenutzungsanordnung einer Brennkraftmaschine dementsprechend eine deutlich verbesserte Leckageermittlung des Arbeitsmediums auf, wobei die Leckage in einem Verdampfer von der Abwärmenutzungsanordnung in den Abgaskanal der Brennkraftmaschine ermittelt wird. Der Verdampfer kann dabei sowohl im Rückführkanal als auch in einem Endkanal des Abgaskanals angeordnet sein. Die Indikatoren für die Leckageermittlung sind sowohl für flüssige als auch für verdampfte Arbeitsmedien geeignet.

Dazu umfasst die Brennkraftmaschine eine Abwärmenutzungsanordnung und einen Abgaskanal. Die Abwärmenutzungsanordnung weist einen ein Arbeitsmedium führenden Kreislauf auf, wobei in dem Kreislauf in Flussrichtung des Arbeitsmediums eine Pumpe, zumindest ein Verdampfer, eine Expansionsmaschine und ein Kondensator angeordnet sind. Der zumindest eine Verdampfer ist auch in dem Abgaskanal angeordnet, wobei in dem zumindest einen Verdampfer ein von der Brennkraftmaschine ausgestoßenes Abgas als Wärmequelle verwendet wird und dadurch das Arbeitsmedium im Verdampfer verdampft wird. Das erfindungsgemäße Verfahren zum Betrieb der Abwärmenutzungsanordnung ermittelt eine Leckage des Arbeitsmediums innerhalb des zumindest einen Verdampfers in den Abgaskanal aus einem gemessenen physikalischen Wert.

Dadurch wird sowohl eine Leckage von flüssigem als auch von verdampftem Arbeitsmedium von dem zumindest einen Verdampfer in den Abgaskanal detektiert.

In einer Weiterbildung des Verfahrens wird die Leckage dadurch ermittelt, dass eine Temperatur des Arbeitsmediums in dem Kreislauf nach dem zumindest einen Verdampfer gemessen wird und diese mit einer berechneten Temperatur verglichen wird. Dadurch ist lediglich ein Temperatursensor im Kreislauf nach dem Verdampfer erforderlich. Das erfindungsgemäße Verfahren kann so einfach und kostengünstig umgesetzt werden. Ist die gemessene Temperatur des Arbeitsmediums nach dem Verdampfer höher als die dafür berechnete Temperatur, ist dies ein Indikator für Leckage, da die zu erhitzende Masse des Arbeitsmediums geringer als erwartet bzw. berechnet ist und demzufolge die gleiche Wärmemenge aus dem Abgaskanal für weniger Masse an Arbeitsmedium zur Verfügung steht.

Erfindungsgemäß wird die Leckage dadurch ermittelt, dass ein Massenstrom des Abgases in dem Abgaskanal nach dem zumindest einen Verdampfer gemessen wird und dieser mit einem berechneten Massenstrom verglichen wird. Dadurch kann direkt die Fluidmenge durch den Abgaskanal gemessen werden. Dies ist ein sehr robuster Indikator zur Leckageermittlung, da der Massenstrom eine direkte Größe zur Leckageermittlung ist. Ist der ermittelte Abgasmassenstrom größer als ein dafür berechneter Wert, ist dies ein Indikator für Leckage, da zusätzlich zur Abgasmasse auch noch Arbeitsmediummasse durch den Abgaskanal fließt und sich dementsprechend der Gesamtmassenstrom erhöht.

Alternativ kann anstelle des Massenstroms auch ein Volumenstrom gemessen werden. Dies gilt im Folgenden für alle Massenströme, falls es nicht ausdrücklich ausgeschlossen ist, dass kein Volumenstrom anstelle des Massenstroms gemessen werden kann.

In einer vorteilhaften Weiterbildung weist der Abgaskanal einen Rückführkanal auf, wobei das Abgas in dem Rückführkanal wieder der Brennkraftmaschine zugeführt wird, und wobei der zumindest eine Verdampfer in dem Rückführkanal angeordnet ist bzw. ein weiterer Verdampfer in dem Rückführkanal angeordnet ist. In dem Verfahren wird eine Abgastemperatur in dem Rückführkanal nach dem zumindest einen Verdampfer bzw. nach dem weiteren Verdampfer gemessen und diese mit einer berechneten Temperatur verglichen. Dadurch kann eine Leckage des Arbeitsmediums auch in einem Verdampfer detektiert werden, der im Rückführkanal angeordnet ist. Ist die gemessene Abgastemperatur in dem Rückführkanal nach dem Verdampfer niedriger als ein dafür berechneter Wert, ist dies ein Indikator für Leckage, da sich das vergleichsweise heiße rückgeführte Abgas mit dem vergleichsweise kühlen Arbeitsmedium vermischt hat. In einem alternativen Verfahren ist ein Indikator für Leckage, wenn die gemessene Abgastemperatur höher ist als ein dafür berechneter Wert: Aufgrund der Leckage fließt ein geringerer Massenstrom an Arbeitsmedium durch den Verdampfer; dadurch wird dem Abgas in dem Verdampfer weniger Wärmemenge entzogen als erwartet und die Temperatur des Abgases nach dem Verdampfer ist somit höher als erwartet.

Vorteilhafterweise wird ein Ladedruck in dem Rückführkanal nach dem zumindest einen Verdampfer bzw. nach dem weiteren Verdampfer gemessen und der Ladedruck mit einem berechneten Ladedruck verglichen. Dies ist speziell dann ein wirkungsvoller Indikator zur Leckageermittlung, wenn innerhalb des Verdampfers der Druck des Arbeitsmediums im Kreislauf deutlich höher ist als der Druck des Abgases im Rückführkanal, so dass eine Leckage im Verdampfer zu einem merklichen Druckeinbruch im Kreislauf und einem merklichen Druckanstieg im Rückführkanal führt.

In einer weiteren vorteilhaften Ausführung ist der zumindest eine Verdampfer oder ein weiterer Verdampfer im Rückführkanal angeordnet und die Abgaszusammensetzung bezüglich Stickoxidausstoß und/oder Restsauerstoffgehalt und/oder Rußausstoß und/oder Kohlenwasserstoffausstoß wird in dem Abgaskanal nach der Brennkraftmaschine gemessen. Die gemessene Abgaszusammensetzung wird anschließend mit einer berechneten Abgaszusammensetzung verglichen. Eine Leckage des im Rückführkanal angeordneten Verdampfers hat eine Auswirkung auf die Abgaszusammensetzung des von der Brennkraftmaschine ausgestoßenen Abgases. Hierbei muss in Bezug auf die chemischen Bestandteile nach Durchströmen der Brennkraftmaschine zwischen brennbaren und nicht brennbaren Arbeitsmedien unterschieden werden. Diese Ausführung ist besonders vorteilhaft, wenn das Abgas nach der Brennkraftmaschine ohnehin von einem Sensor - beispielsweise von einer Lambda-Sonde - untersucht wird und die chemischen Bestandteile des Arbeitsmediums einen Effekt auf die Messergebnisse des Sensors haben. Die Lambda-Sonde beispielsweise misst einen Restsauerstoffgehalt des Abgases. Wird dieser Restsauerstoffgehalt durch das Arbeitsmedium der Leckage beeinflusst, können die Messergebnisse der Lambda-Sonde sehr gut als Indikator für eine Leckage innerhalb des Verdampfers im Rückführkanal verwendet werden.

In einer weiteren vorteilhaften Ausführung wird ein Drehmoment der Brennkraftmaschine ermittelt und dieses mit einem berechneten Drehmoment verglichen. Ist der Verdampfer in einem Endkanal des Abgaskanals angeordnet, wobei das Abgas im Endkanal an die Umgebung ausgestoßen wird, dann ist ein Indikator für Leckage, wenn das gemessene Drehmoment kleiner als das berechnete Drehmoment ist, da ein geringerer Massenstrom an Arbeitsmedium als berechnet in der Expansionsmaschine entspannt wird. Ist der Verdampfer dagegen im Rückführkanal angeordnet, dann ist ein Indikator für Leckage, wenn das gemessene Drehmoment größer als das berechnete Drehmoment ist, sofern das Arbeitsmedium brennbar ist und in der Brennkraftmaschine gezündet wird, da durch das Verbrennen des Arbeitsmediums zusätzliche Energie in Drehmoment umgewandelt wird.

Vorteilhafterweise sind ein Verdampfer im Endkanal und ein weiterer Verdampfer im Rückführkanal angeordnet. Durch das Überwachen des Drehmoments der Brennkraftmaschine können dann die Leckagen sowohl im Verdampfer als auch im weiteren Verdampfer mit Hilfe eines einzigen Sensors für die Ermittlung des Drehmoments der Brennkraftmaschine detektiert werden. Beispielsweise ist ein ermitteltes Drehmoment, welches größer ist als ein dafür berechneter Wert, ein Indikator für Leckage von Arbeitsmedium im weiteren Verdampfer in den Rückführkanal, wenn anschließend das Arbeitsmedium im Brennraum der Brennkraftmaschine verbrannt wird. Ein ermitteltes Drehmoment, welches kleiner ist als ein dafür berechneter Wert, ist wiederum ein Indikator für Leckage von Arbeitsmedium in dem Verdampfer an die Umgebung, so dass die von der Expansionsmaschine abgegebene Leistung abfällt.

In einer weiteren vorteilhaften Ausführung ist der zumindest eine Verdampfer bzw. der weitere Verdampfer in dem Rückführkanal angeordnet. Das erfindungsgemäße Verfahren ermittelt eine Drehzahl der Brennkraftmaschine und vergleicht diese mit einer berechneten Drehzahl. Dieses Vorgehen ist speziell dann vorteilhaft wenn das Arbeitsmedium brennbar ist und in der Brennkraftmaschine verbrannt wird. Hierbei muss jedoch unterschieden werden, in welchem Stadium des Verdichtungstakts der Brennkraftmaschine die Verbrennung erfolgt. Erfolgt die Verbrennung in einem frühen Stadium, dann ist es ein Indikator für Leckage, wenn die Drehzahl der Brennkraftmaschine kleiner ist als die berechnete Drehzahl, weil die Verbrennung des Arbeitsmediums bremsend auf die Brennkraftmaschine wirkt. Erfolgt die Verbrennung jedoch in einem späten Stadium, dann ist es ein Indikator für Leckage, wenn die Drehzahl der Brennkraftmaschine größer ist als die berechnete Drehzahl, weil die Verbrennung des Arbeitsmediums beschleunigend auf die Brennkraftmaschine wirkt. Vorzugsweise verarbeitet ein Steuergerät die ermittelten Daten von Drehzahl und Verbrennungsprozess. Dieses Verfahren ist sehr vorteilhaft, da üblicherweise ohnehin ein Drehzahlsensor verwendet und auch der Verbrennungsprozess überwacht wird, so dass die Leckageermittlung kostenneutral erfolgen kann.

In einer weiteren vorteilhaften Ausführung ist der zumindest eine Verdampfer bzw. der weitere Verdampfer in dem Rückführkanal angeordnet. Das erfindungsgemäße Verfahren ermittelt einen Zylinderdruck in der Brennkammer der Brennkraftmaschine und vergleicht diesen mit einem berechneten Zylinderdruck. Ist der ermittelte Zylinderdruck größer als der berechnete Zylinderdruck, ist dies ein Indikator für Leckage, sofern das Arbeitsmedium brennbar ist und in der Brennkraftmaschine gezündet wird. Auch dieses Verfahren ist kostenneutral, wenn der Zylinderdruck ohnehin ermittelt wird.

Für sämtliche Verfahren gilt, dass eine Kombination der beschriebenen Verfahren zu einer robusteren und genaueren Detektion der Leckage in dem Verdampfer bzw. in den beiden Verdampfern führt. Vorteilhafterweise werden dabei die Sensoren verwendet, die ohnehin in der Brennkraftmaschine, im Abgaskanal und im Kreislauf vorhanden sind: beispielsweise ein Drehzahlsensor an der Ausgangswelle der Brennkraftmaschine, eine Lambda-Sonde im Abgaskanal und ein Temperatursensor im Kreislauf vor der Expansionsmaschine.

### Zeichnungen

Die **Fig.1** zeigt eine Abwärmenutzungsanordnung einer Brennkraftmaschine mit Sensoren zur Ermittlung einer Leckage des Arbeitsmediums.

Die **Fig.2** zeigt eine Abwärmenutzungsanordnung einer Brennkraftmaschine mit weiteren Sensoren zur Ermittlung einer Leckage des Arbeitsmediums.

Die **Fig.3** zeigt eine Abwärmenutzungsanordnung einer Brennkraftmaschine mit noch weiteren Sensoren zur Ermittlung einer Leckage des Arbeitsmediums.

### Beschreibung

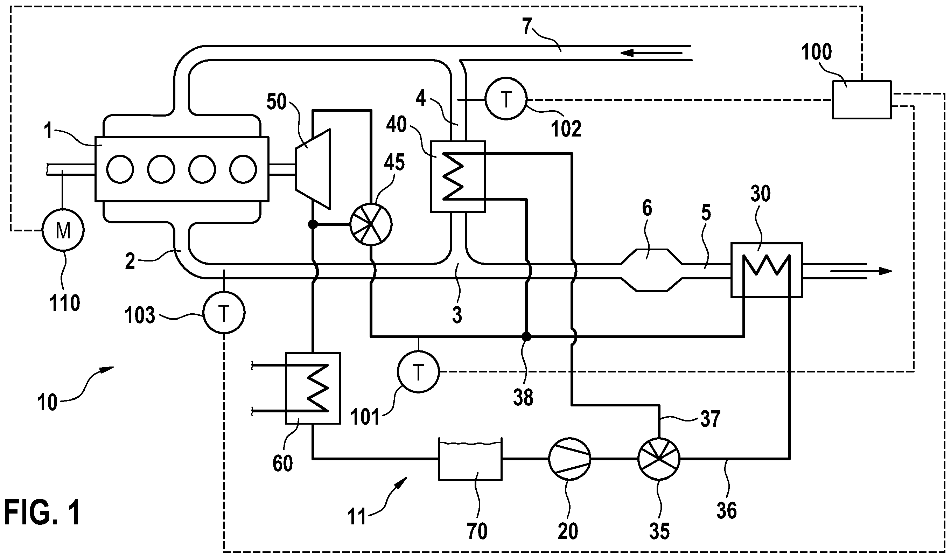

**Fig.1** zeigt schematisch eine erfindungsgemäße Abwärmenutzungsanordnung 10 einer Brennkraftmaschine 1 mit einem ein Arbeitsmedium führenden Kreislauf 11.

Der Brennkraftmaschine 1 wird Frischluft über einen Frischluftkanal 7 zugeführt. Weiterhin weist die Brennkraftmaschine 1 einen Abgaskanal 2 auf, durch den das Abgas nach dem Verbrennungsprozess aus der Brennkraftmaschine 1 ausgestoßen wird. Der Abgaskanal 2 teilt sich an einem Knotenpunkt 3 in einen Rückführkanal 4 und einen Endkanal 5 auf. Über den Rückführkanal 4 kann zumindest ein Teil des Abgases wieder dem Frischluftkanal 7 zugeführt werden. Über den Endkanal 5 wird das Abgas an die Umgebung ausgestoßen. Im Endkanal 5 können diverse Abgasnachbehandlungssysteme angeordnet sein; exemplarisch ist dabei im Ausführungsbeispiel der **Fig.1** ein Abgasnachbehandlungssystem 6 angeordnet.

Die Aufteilung des Abgasmassenstroms am Knotenpunkt 3 in den Rückführkanal 4 und in den Endkanal 5 wird von einer nicht dargestellten Steuerung, beispielsweise einem Ventil, durchgeführt und der jeweiligen Betriebssituation von Brennkraftmaschine 1 und Abwärmenutzungsanordnung 10 angepasst.

In dem Arbeitsmedium führenden Kreislauf 11 der Abwärmenutzungsanordnung 10 sind in Flussrichtung des Arbeitsmediums eine Pumpe 20, ein Verdampfer 30, ein weiterer Verdampfer 40, eine Expansionsmaschine 50 und ein Kondensator 60 angeordnet, wobei die beiden Verdampfer (30, 40) parallel geschaltet sind. Zwischen dem Kondensator 60 und der Pumpe 20 ist ein Sammelbehälter 70 zum Sammeln des Arbeitsmediums angeordnet.

Die beiden Verdampfer 30, 40 sind sowohl in dem Kreislauf 11 als auch in dem Abgaskanal 2 angeordnet, wobei der Verdampfer 30 im Endkanal 5 und der weitere Verdampfer 40 im Rückführkanal 4 angeordnet ist.

In den beiden Verdampfern 30, 40 wird das von der Brennkraftmaschine 1 ausgestoßene Abgas als Wärmequelle verwendet, um damit das Arbeitsmedium in den Verdampfern 30, 40 zu verdampfen.

In der Abwärmenutzungsanordnung 10 der **Fig.1** sind der Verdampfer 30 und der weitere Verdampfer 40 parallel geschalten. Dazu teilt sich der Kreislauf 11 nach der Pumpe 20 an einem Verteilerventil 35 in eine erste Verdampferleitung 36 und eine zweite Verdampferleitung 37 auf. Der Verdampfer 30 ist in der ersten Verdampferleitung 36 und der weitere Verdampfer 40 in der zweiten Verdampferleitung 37 angeordnet. Nach den beiden Verdampfern 30, 40 werden die erste Verdampferleitung 36 und die zweite Verdampferleitung 37 an einem Vereinigungspunkt 38 wieder zusammengeführt. In alternativen Ausführungsformen können die beiden Verdampfer 30, 40 auch in Reihe geschaltet sein.

Nach dem Vereinigungspunkt 38 ist im Kreislauf 11 ein Bypassventil 45 angeordnet. Über das Bypassventil 45 kann das Arbeitsmedium der Expansionsmaschine 50 zugeführt werden, oder an dieser vorbeigeleitet und direkt dem Kondensator 60 zugeführt werden.

Die Expansionsmaschine 50 ist im Ausführungsbeispiel der **Fig.1** mit einer Ausgangswelle an die Brennkraftmaschine 1 gekoppelt. In alternativen Ausführungsformen kann die von der Expansionsmaschine 50 abgegebene Leistung jedoch auch anderweitig genutzt werden, beispielsweise zur Stromerzeugung in einem angeschlossenen Generator.

Die Funktionsweise der Abwärmenutzungsanordnung 10 ist wie folgt:
Die Pumpe 20 fördert flüssiges Arbeitsmedium unter Druck aus dem Sammelbehälter 70 über das Verteilerventil 35 in den Verdampfer 30 und/oder in den weiteren Verdampfer 40. Die Aufteilung des Arbeitsmediums auf die beiden Verdampfer 30, 40 wird dabei durch das Verteilerventil 35 gesteuert. In den Verdampfern 30, 40 wird das Arbeitsmedium idealerweise isobar verdampft und anschließend der Expansionsmaschine 50 zugeführt. In der Expansionsmaschine 50 wird das gasförmige Arbeitsmedium entspannt und erzeugt dadurch eine mechanische Leistung, welche zum Beispiel in Form eines Drehmoments einer Abtriebswelle der Brennkraftmaschine zugeführt werden kann. Das Arbeitsmedium wird anschließend im Kondensator 60 wieder verflüssigt und danach dem Sammelbehälter 70 zugeführt.

Genügt die Wärmemenge in den Verdampfern 30, 40 nicht zum Verdampfen des Arbeitsmediums, so kann das Arbeitsmedium über das Bypassventil 45 an der Expansionsmaschine 50 vorbeigeführt werden, um Schäden in der Expansionsmaschine 50 zu vermeiden. In weiteren Ausführungsbeispielen kann das Arbeitsmedium auch über ein oder mehrere zusätzliche Bypassventile an dem Kondensator 60 und/oder dem Sammelbehälter 70 und/oder der Pumpe 20 vorbeigeführt werden.

Erfindungsgemäß sind im Kreislauf 11 und/oder im Abgaskanal 2 ein oder mehrere Sensoren zur Messung diverser Größen angeordnet, mit deren Hilfe eine Leckage des Arbeitsmediums innerhalb der Verdampfer 30, 40 von dem Kreislauf 11 in den Abgaskanal 2 detektiert werden kann. Die **Figuren 1 bis 3** zeigen dabei verschiedene Sensoren zur Ermittlung der Leckage, wobei die Signale der Sensoren einem Steuergerät 100 zugeführt werden.

Es zeigen:
- Die **Fig.1****:** Einen ersten Temperatursensor 101 im Kreislauf 11 zwischen dem Vereinigungspunkt 38 und dem Bypassventil 45 zur Messung der Temperatur des Arbeitsmediums nach den Verdampfern 30, 40; einen zweiten Temperatursensor 102 im Rückführkanal 4 nach dem weiteren Verdampfer 40 zur Messung der Temperatur des Abgases nach dem weiteren Verdampfer 40; einen dritten Temperatursensor 103 im Abgaskanal 2 nach der Brennkraftmaschine 1 zur Messung der Temperatur des Abgases nach der Brennkraftmaschine 1; einen Drehmomentsensor 110 auf der Abtriebswelle der Brennkraftmaschine 1 zur Messung des Drehmoments der Brennkraftmaschine 1.

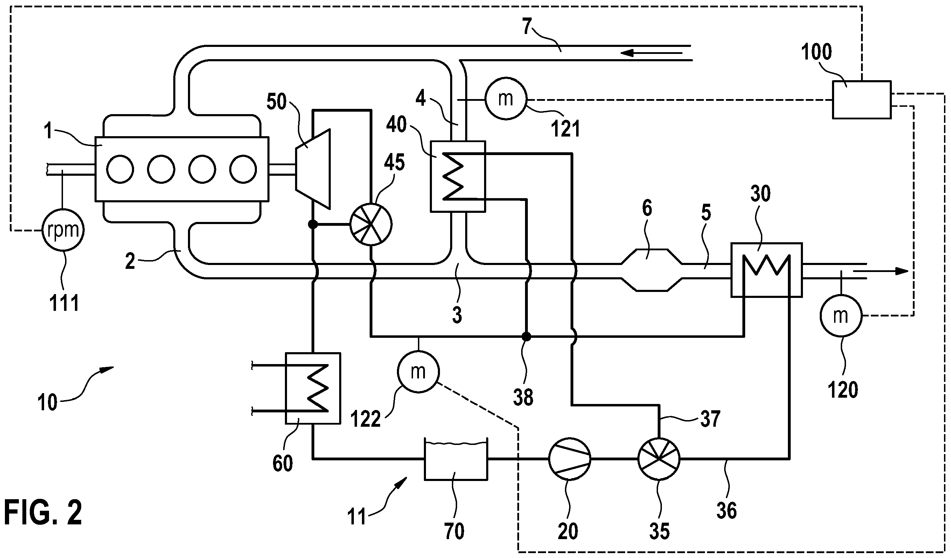

- Die **Fig.2****:** Einen ersten Massenstromsensor 120 im Endkanal 5 nach dem ersten Verdampfer 30 zur Messung des Abgasmassenstroms nach dem ersten Verdampfer 30; einen zweiten Massenstromsensor 121 im Rückführkanal 4 nach dem weiteren Verdampfer 40 zur Messung des Abgasmassenstroms nach dem weiteren Verdampfer 40; einen dritten Massenstromsensor 122 im Kreislauf 11 zwischen dem Vereinigungspunkt 38 und dem Bypassventil 45 zur Messung des Massenstroms des verdampften Arbeitsmediums nach den Verdampfern 30, 40; einen Drehzahlsensor 111 auf der Abtriebswelle der Brennkraftmaschine 1 zur Messung der Drehzahl der Brennkraftmaschine 1.

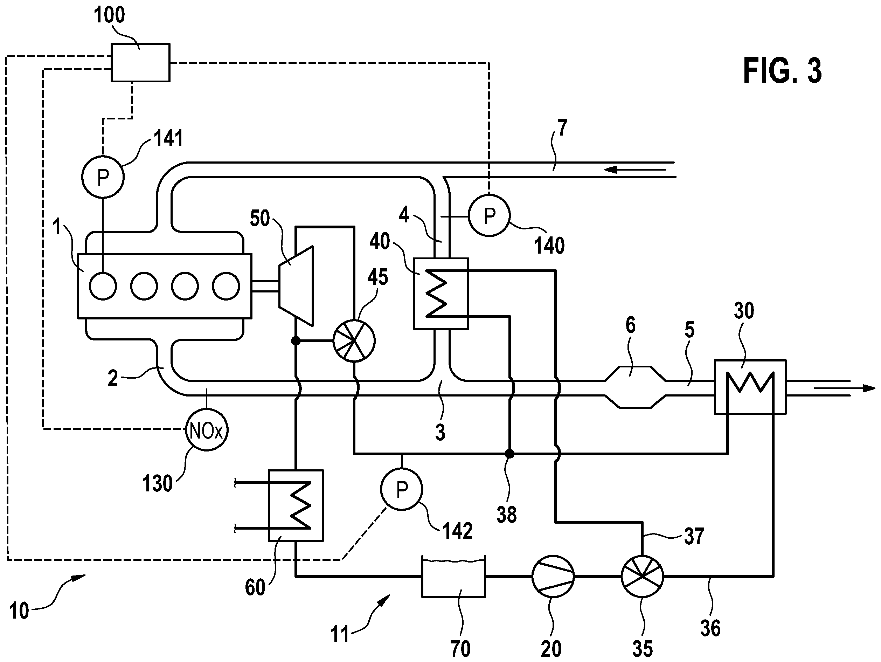

- Die **Fig.3****:** Einen Abgasbestandteilsensor 130 im Abgaskanal 2 nach der Brennkraftmaschine 1 zur Messung der Abgaszusammensetzung bezüglich Stickoxidausstoß und/oder Rußausstoß und/oder Kohlenwasserstoffausstoß; einen ersten Drucksensor 140 im Rückführkanal 4 nach dem weiteren Verdampfer 40 zur Messung des Ladedrucks nach dem weiteren Verdampfer 40; alternativ kann der erste Drucksensor 140 dabei auch in dem Frischluftkanal 7, sogar vor dem Zusammenfluss mit dem Rückführkanal 4, angeordnet sein; einen zweiten Drucksensor 141 in der Brennkammer der Brennkraftmaschine 1 zur Ermittlung des Zylinderdrucks in der Brennkammer; einen dritten Drucksensor 142 im Kreislauf 11 zwischen Vereinigungspunkt 38 und Bypassventil 45 zur Messung des Dampfdrucks vor dem Bypassventil 45.

Dabei können die in den Ausführungsformen der **Figuren 1 bis 3** gezeigten Sensoren selbstverständlich auch anderweitig kombiniert werden. Generell gilt für die Ermittlung der Leckage in den Verdampfern 30, 40: je mehr Sensoren bzw. Indikatoren verwendet werden, desto zuverlässiger und genauer ist auch die Leckageermittlung. Selbstverständlich können auch Sensoren verwendet werden, die gleichzeitig mehrere Größen (beispielsweise Druck und Temperatur) erfassen. Besonders vorteilhaft ist es, wenn Sensoren für die Leckageermittlung verwendet werden, die ohnehin schon in die Abwärmenutzungsanordnung oder zum Betrieb der Brennkraftmaschine zur Regelung, Steuerung oder Überwachung anderer Größen angeordnet sind; die Leckageermittlung kann in diesen Fällen ohne Zusatzkosten durchgeführt werden.

Weiterhin können die genannten Sensoren auch so verwendet werden, dass damit Ersatzgrößen ermittelt werden. So kann beispielsweise anstelle eines Abgasmassenstroms auch ein Abgasvolumenstrom oder ein Druck gemessen werden, der anschließend vom Steuergerät 100 in einen Abgasmassenstrom umgerechnet wird. Zur Ermittlung der Abgaszusammensetzung kann als Abgasbestandteilsensor 130 auch eine Lambda-Sonde eingesetzt werden, die den Restsauerstoffgehalt im Abgas misst. Wenn Leckage des Arbeitsmediums, beispielsweise Ethanol, in der Brennkraftmaschine verbrannt wird, dann sinkt der Restsauerstoffgehalt im Abgas ab. Die Lambda-Sonde ist in diesem Fall ein direkter Indikator für eine Leckage.

Erfindungsgemäß werden folgende Indikatoren für eine Leckage des Arbeitsmediums innerhalb der Verdampfer 30, 40 in den Abgaskanal verwendet:
- Ermittlung der Temperatur des Arbeitsmediums nach dem Verdampfer 30, 40, beispielsweise durch den ersten Temperatursensor 101: Ist die ermittelte Temperatur höher als ein dafür berechneter Wert, so ist dies ein Indikator für Leckage innerhalb des Verdampfers 30, 40, da die zur Verfügung stehende Wärmemenge des Abgases in dem Verdampfer 30, 40 einer kleineren Menge des Arbeitsmediums als erwartet zugeführt wird. Dieser Indikator gilt sowohl für den Verdampfer 30 als auch für den weiteren Verdampfer 40.
- Ermittlung der Abgastemperatur im Rückführkanal 4 nach dem weiteren Verdampfer 40, beispielsweise durch den zweiten Temperatursensor 102: Ist die ermittelte Temperatur niedriger als ein dafür berechneter Wert, so ist dies ein Indikator für Leckage innerhalb des weiteren Verdampfers 40, da vergleichsweise kaltes Arbeitsmedium sich mit dem Abgas vermischt und dieses abkühlt. In einer alternativen Variante ist es aber auch ein Indikator für Leckage, wenn die ermittelte Temperatur höher ist als ein dafür berechneter Wert, da aufgrund des geringen Massenstroms an Arbeitsmedium dem Abgas nur eine vergleichsweise geringe Wärmeleistung entzogen wird. Diese Indikatoren gelten nur für den weiteren Verdampfer 40.
- Ermittlung der Abgastemperatur im Abgaskanal 2 nach der Brennkraftmaschine 1, beispielsweise durch den dritten Temperatursensor 103: Ist die ermittelte Temperatur höher als ein dafür berechneter Wert, so ist dies ein Indikator für Leckage innerhalb des Verdampfers 40, falls das Arbeitsmedium brennbar ist, da das Arbeitsmedium in der Brennkraftmaschine 1 gezündet wird und dadurch Wärmeenergie freisetzt. Dieser Indikator gilt nur für den weiteren Verdampfer 40, da die Leckage des Arbeitsmediums in diesem Fall der Brennkraftmaschine zugeführt werden muss.
- Ermittlung des Ladedrucks im Rückführkanal 4 nach dem weiteren Verdampfer 40, beispielsweise durch den ersten Drucksensor 140: Ist der ermittelte Druck höher als ein dafür berechneter Wert, so ist dies ein Indikator für Leckage innerhalb des weiteren Verdampfers 40, sofern im Kreislauf 11 innerhalb des weiteren Verdampfers 40 ein höherer Druck herrscht als im Rückführkanal 4. Dieser Indikator gilt nur für den weiteren Verdampfer 40.
- Ermittlung des Zylinderdrucks in der Brennkammer der Brennkraftmaschine 1, beispielsweise durch den zweiten Drucksensor 141: Ist der ermittelte Druck höher als ein dafür berechneter Wert, so ist dies ein Indikator für Leckage innerhalb des weiteren Verdampfers 40, falls das Arbeitsmedium brennbar ist und die Temperatur in der Brennkammer hoch genug für einen Abbrand des Arbeitsmediums ist, da das Arbeitsmedium in der Brennkraftmaschine 1 gezündet wird und dadurch zusätzlicher Druck in der Brennkammer entsteht. Dieser Indikator gilt nur für den weiteren Verdampfer 40.
- Ermittlung des Dampfdrucks des verdampften Arbeitsmediums im Kreislauf 11 nach dem Verdampfer 30, 40, beispielsweise durch den dritten Drucksensor 142: Ist der ermittelte Druck niedriger als ein dafür berechneter Wert, so ist dies ein Indikator für Leckage innerhalb des Verdampfers 30, 40, sofern im Kreislauf 11 nach dem Verdampfer 30, 40 ein höherer Druck herrscht als im Abgaskanal 2, da die Leckagestelle als eine Art Drossel in den Abgaskanal 2 wirkt und demzufolge der Druck im Kreislauf 11 abgebaut wird. Dieser Indikator gilt sowohl für den Verdampfer 30 als auch für den weiteren Verdampfer 40.
- Ermittlung des Abgasmassenstroms im Abgaskanal 2 nach dem Verdampfer 30, 40, beispielsweise durch den ersten Massenstromsensor 120 für den ersten Verdampfer 30 oder durch den zweiten Massenstromsensor 121 für den weiteren Verdampfer 40: Ist der ermittelte Massenstrom größer als ein dafür berechneter Wert, so ist dies ein Indikator für Leckage innerhalb des Verdampfers 30, 40, da mit dem Arbeitsmedium der Leckage zusätzliche Masse in den Abgaskanal 2 gelangt. Dieser Indikator gilt sowohl für den Verdampfer 30 als auch für den weiteren Verdampfer 40.
- Ermittlung des Massenstroms des verdampften oder auch des noch flüssigen Arbeitsmediums im Kreislauf 11 nach dem Verdampfer 30, 40, beispielsweise durch den dritten Massenstromsensor 122: Ist der ermittelte Massenstrom geringer als ein dafür berechneter Wert, so ist dies ein Indikator für Leckage innerhalb des Verdampfers 30, 40, da mit dem Arbeitsmedium der Leckage Masse aus dem Kreislauf 11 entweicht. Dieser Indikator gilt sowohl für den Verdampfer 30 als auch für den weiteren Verdampfer 40.
- Ermittlung der Abgaszusammensetzung im Abgaskanal 2, beispielsweise durch den Abgasbestandteilsensor 130, der auch eine Lambda-Sonde sein kann; alternativ können auch Sensoren verwendet werden, die in dem Abgasnachbehandlungssystem 6 angeordnet sind. In beiden Fällen müssen jedoch die chemischen Bestandteile des Arbeitsmediums genauer bertachtet werden. Je nach Arbeitsmedium können beispielsweise ein gegenüber dem erwarteten Wert höherer oder auch niedrigerer ermittelter Wert des Stickstoffgehalts im Abgas ein Indikator für Leckage innerhalb des weiteren Verdampfers 40 sein. Enthält verbranntes Arbeitsmedium Stickstoff, dann wird der Stickstoffgehalt bei Leckage höher sein als erwartet. Verbrennt das Arbeitsmedium in der Brennmaschine 1 dagegen nicht, dann wird der Stickstoffgehalt bei Leckage unter einem erwarteten Wert liegen. Weiterhin kann auch der Restsauerstoffgehalt des Abgases ermittelt werden: ein niedrigerer ermittelter Wert an Restsauerstoffgehalt ist ein Indikator für Leckage, wenn die Arbeitsmediumleckage in der Brennkraftmaschine verbrannt wird. Diese Indikatoren gelten nur für den weiteren Verdampfer 40.
- Ermittlung des Drehmoments der Brennkraftmaschine 1, beispielsweise durch den Drehmomentsensor 110: Ist das ermittelte Drehmoment größer als ein dafür berechnetes Drehmoment, so ist dies ein Indikator für Leckage innerhalb des weiteren Verdampfers 40 in den Rückführkanal 4, sofern das Arbeitsmedium brennbar ist und in der Brennkraftmaschine gezündet wird. Hier muss jedoch noch die Selbstzündungstemperatur des Arbeitsmediums berücksichtigt werden: Findet die Verbrennung des Arbeitsmediums nämlich beispielsweise sehr früh in der Verdichtungsphase statt, dann könnte es nämlich zum sogenannten Klopfen und damit sogar zu einem Drehmomentabfall kommen. Um dies zu ermitteln, können vorteilhafterweise auch Klopfsensoren verwendet werden. Ist das ermittelte Drehmoment der Brennkraftmaschine geringer als ein dafür berechnetes Drehmoment, so kann dies aber auch ein Indikator für Leckage innerhalb des ersten Verdampfers 30 in den Endkanal 5 sein, da dann im ersten Verdampfer weniger Arbeitsmedium verdampft wird, welches anschließend der Expansionsmaschine 50 zur Verfügung gestellt werden kann. Diese Indikatoren gelten sowohl für den Verdampfer 30 als auch für den weiteren Verdampfer 40, jedoch mit den beschriebenen unterschiedlichen Auswirkungen auf das Drehmoment.
- Ermittlung der Drehzahl der Brennkraftmaschine 1, beispielsweise durch den Drehzahlsensor 111: Ist die ermittelte Drehzahl größer als ein dafür berechneter Wert, so ist dies ein Indikator für Leckage innerhalb des weiteren Verdampfers 40, sofern das Arbeitsmedium brennbar ist und in einem vergleichsweise späten Stadium des Verdichtungstaktes verbrannt wird; die Verbrennung des Arbeitsmediums wirkt dann beschleunigend für die Brennkraftmaschine 1. Ist die ermittelte Drehzahl kleiner als ein dafür berechneter Wert, so ist dies ein Indikator für Leckage innerhalb des weiteren Verdampfers 40, sofern das Arbeitsmedium brennbar ist und in einem vergleichsweise frühen Stadium des Verdichtungstaktes verbrannt wird; die Verbrennung des Arbeitsmediums wirkt dann bremsend auf die Brennkraftmaschine 1. Dieser Indikator gilt nur für den weiteren Verdampfer 40.

## Patentansprüche

1. Verfahren zum Betrieb einer Abwärmenutzungsanordnung (10) einer Brennkraftmaschine (1), wobei die Brennkraftmaschine (1) einen Abgaskanal (2) aufweist und die Abwärmenutzungsanordnung (10) einen ein Arbeitsmedium führenden Kreislauf (11) aufweist, wobei in dem Kreislauf (11) in Flussrichtung des Arbeitsmediums eine Pumpe (20), zumindest ein Verdampfer (30, 40), eine Expansionsmaschine (50) und ein Kondensator (60) angeordnet sind, wobei der zumindest eine Verdampfer (30, 40) auch in dem Abgaskanal (2) angeordnet ist und wobei in dem zumindest einen Verdampfer (30, 40) ein von der Brennkraftmaschine ausgestoßenes Abgas als Wärmequelle verwendet wird und dadurch das Arbeitsmedium in dem zumindest einen Verdampfer (30, 40) verdampft wird, wobei eine Leckage des Arbeitsmediums innerhalb des zumindest einen Verdampfers (30, 40) in den Abgaskanal (2) aus einem gemessenen physikalischen Wert ermittelt wird,
**dadurch gekennzeichnet, dass** die Leckage dadurch ermittelt wird, dass ein Massenstrom des Abgases in dem Abgaskanal (2) nach dem zumindest einen Verdampfer (30, 40) gemessen wird und dieser mit einem berechneten Massenstrom verglichen wird.

2. Verfahren nach Anspruch 1, **dadurch gekennzeichnet, dass** die Leckage dadurch ermittelt wird, dass eine Temperatur des Arbeitsmediums in dem Kreislauf (11) nach dem zumindest einen Verdampfer (30, 40) gemessen wird und diese mit einer berechneten Temperatur verglichen wird.

3. Verfahren nach einem der vorhergehenden Ansprüche, wobei der Abgaskanal (2) einen Rückführkanal (4) aufweist, wobei das Abgas in dem Rückführkanal (4) der Brennkraftmaschine (1) zugeführt wird, und wobei der zumindest eine Verdampfer (40) in dem Rückführkanal (4) angeordnet ist, **dadurch gekennzeichnet, dass** eine Abgastemperatur in dem Rückführkanal (4) nach dem zumindest einen Verdampfer (40) gemessen und diese mit einer berechneten Temperatur verglichen wird.

4. Verfahren nach einem der Ansprüche 1 oder 2, wobei der Abgaskanal (2) einen Rückführkanal (4) aufweist, wobei das Abgas in dem Rückführkanal (4) der Brennkraftmaschine (1) zugeführt wird, und wobei der zumindest eine Verdampfer (40) in dem Rückführkanal (4) angeordnet ist, **dadurch gekennzeichnet, dass** ein Ladedruck in dem Rückführkanal (4) nach dem zumindest einen Verdampfer (40) gemessen und dieser mit einem berechneten Ladedruck verglichen wird.

5. Verfahren nach einem der Ansprüche 1 oder 2, wobei der Abgaskanal (2) einen Rückführkanal (4) aufweist, wobei das Abgas in dem Rückführkanal (4) der Brennkraftmaschine (1) zugeführt wird, und wobei der zumindest eine Verdampfer (40) in dem Rückführkanal (4) angeordnet ist, **dadurch gekennzeichnet, dass** die Abgaszusammensetzung bezüglich Stickoxidausstoß und/oder Restsauerstoffgehalt und/oder Rußausstoß und/oder Kohlenwasserstoffausstoß in dem Abgaskanal (2) nach der Brennkraftmaschine (1) gemessen und diese mit einer berechneten Abgaszusammensetzung verglichen wird.

6. Verfahren nach Anspruch 5, wobei die Abgaszusammensetzung durch eine in dem Abgaskanal angeordnete Lambda-Sonde ermittelt wird.

7. Verfahren nach einem der Ansprüche 1 oder 2, wobei der Abgaskanal (2) einen Rückführkanal (4) aufweist, wobei das Abgas in dem Rückführkanal (4) der Brennkraftmaschine (1) zugeführt wird, und wobei der zumindest eine Verdampfer (40) in dem Rückführkanal (4) angeordnet ist, **dadurch gekennzeichnet, dass** ein Drehmoment der Brennkraftmaschine (1) gemessen und dieses mit einem berechneten Drehmoment verglichen wird.

8. Verfahren nach einem der Ansprüche 1 oder 2, wobei der Abgaskanal (2) einen Rückführkanal (4) aufweist, wobei das Abgas in dem Rückführkanal (4) der Brennkraftmaschine (1) zugeführt wird, wobei der zumindest eine Verdampfer (40) in dem Rückführkanal (4) angeordnet ist und wobei die Brennkraftmaschine (1) eine Brennkammer aufweist, **dadurch gekennzeichnet, dass** ein Zylinderdruck in der Brennkammer gemessen wird und dieser mit einem berechneten Zylinderdruck verglichen wird.

9. Verfahren nach einem der Ansprüche 1 oder 2, wobei der Abgaskanal (2) einen Endkanal (5) aufweist, wobei das Abgas in dem Endkanal (5) an die Umgebung ausgestoßen wird, und wobei der zumindest eine Verdampfer (30) in dem Endkanal (5) angeordnet ist, **dadurch gekennzeichnet, dass** ein Drehmoment der Brennkraftmaschine (1) gemessen wird und dieses mit einem berechneten Drehmoment verglichen wird.

10. Verfahren zum Betrieb einer Abwärmenutzungsanordnung (10) einer Brennkraftmaschine (1), wobei die Brennkraftmaschine (1) einen Abgaskanal (2) aufweist und die Abwärmenutzungsanordnung (10) einen ein Arbeitsmedium führenden Kreislauf (11) aufweist, wobei in dem Kreislauf (11) in Flussrichtung des Arbeitsmediums eine Pumpe (20), zumindest ein Verdampfer (30, 40), eine Expansionsmaschine (50) und ein Kondensator (60) angeordnet sind, wobei der zumindest eine Verdampfer (30, 40) auch in dem Abgaskanal (2) angeordnet ist und wobei in dem zumindest einen Verdampfer (30, 40) ein von der Brennkraftmaschine ausgestoßenes Abgas als Wärmequelle verwendet wird und dadurch das Arbeitsmedium in dem zumindest einen Verdampfer (30, 40) verdampft wird, wobei eine Leckage des Arbeitsmediums innerhalb des zumindest einen Verdampfers (30, 40) in den Abgaskanal (2) aus einem gemessenen physikalischen Wert ermittelt wird,
wobei der Abgaskanal (2) einen Rückführkanal (4) aufweist, wobei das Abgas in dem Rückführkanal (4) der Brennkraftmaschine (1) zugeführt wird, und wobei der zumindest eine Verdampfer (40) in dem Rückführkanal (4) angeordnet ist, wobei eine Drehzahl der Brennkraftmaschine (1) gemessen und diese mit einer berechneten Drehzahl verglichen wird, wobei die Drehzahl der Brennkraftmaschine (1) kleiner bzw. größer ist als die berechnete Drehzahl, **dadurch gekennzeichnet, dass** ein Steuergerät (100) die Leckage detektiert, wenn eine Verbrennung des Arbeitsmediums in der Brennkraftmaschine (1) in einem frühen bzw. in einem späten Stadium des Verdichtungstakts erfolgt.

## Claims

1. Method for operating an arrangement for using waste heat (10) of an internal combustion engine (1), wherein the internal combustion engine (1) has an exhaust gas channel (2), and the arrangement for using waste heat (10) has a circuit (11) conducting a working medium, wherein a pump (20), at least one evaporator (30, 40), an expansion machine (50) and a condenser (60) are arranged in the direction of flow of the working medium in the circuit (11), wherein the at least one evaporator (30, 40) is also arranged in the exhaust gas channel (2), and wherein, in the at least one evaporator (30, 40), use is made of an exhaust gas output by the internal combustion engine as a heat source, and the working medium is thereby evaporated in the at least one evaporator (30, 40), wherein a leakage of the working medium within the at least one evaporator (30, 40) into the exhaust gas channel (2) is determined from a measured physical value, **characterized in that** the leakage is determined by the fact that a mass flow of the exhaust gas in the exhaust gas channel (2) downstream of the at least one evaporator (30, 40) is measured, and said mass flow is compared with a calculated mass flow.

2. Method according to Claim 1, **characterized in that** the leakage is determined by the fact that a temperature of the working medium in the circuit (11) downstream of the at least one evaporator (30, 40) is measured, and said temperature is compared with a calculated temperature.

3. Method according to either of the preceding claims, wherein the exhaust gas channel (2) has a return channel (4), wherein the exhaust gas in the return channel (4) is supplied to the internal combustion engine (1), and wherein the at least one evaporator (40) is arranged in the return channel (4), **characterized in that** an exhaust gas temperature in the return channel (4) downstream of the at least one evaporator (40) is measured, and said exhaust gas temperature is compared with a calculated temperature.

4. Method according to either of Claims 1 and 2, wherein the exhaust gas channel (2) has a return channel (4), wherein the exhaust gas in the return channel (4) is supplied to the internal combustion engine (1), and wherein the at least one evaporator (40) is arranged in the return channel (4), **characterized in that** a charging pressure in the return channel (4) downstream of the at least one evaporator (40) is measured, and said charging pressure is compared with a calculated charging pressure.

5. Method according to either of Claims 1 and 2, wherein the exhaust gas channel (2) has a return channel (4), wherein the exhaust gas in the return channel (4) is supplied to the internal combustion engine (1), and wherein the at least one evaporator (40) is arranged in the return channel (4), **characterized in that** the exhaust gas composition with respect to nitrogen oxide output and/or residual oxygen content and/or soot output and/or hydrocarbon output in the exhaust gas channel (2) downstream of the internal combustion engine (1) is measured, and said exhaust gas composition is compared with a calculated exhaust gas composition.

6. Method according to Claim 5, wherein the exhaust gas composition is determined by a lambda probe arranged in the exhaust gas channel.

7. Method according to either of Claims 1 and 2, wherein the exhaust gas channel (2) has a return channel (4), wherein the exhaust gas in the return channel (4) is supplied to the internal combustion engine (1), and wherein the at least one evaporator (40) is arranged in the return channel (4), **characterized in that** a torque of the internal combustion engine (1) is measured, and said torque is compared with a calculated torque.

8. Method according to either of Claims 1 and 2, wherein the exhaust gas channel (2) has a return channel (4), wherein the exhaust gas in the return channel (4) is supplied to the internal combustion engine (1), wherein the at least one evaporator (40) is arranged in the return channel (4), and wherein the internal combustion engine (1) has a combustion chamber, **characterized in that** a cylinder pressure in the combustion chamber is measured, and said cylinder pressure is compared with a calculated cylinder pressure.

9. Method according to either of Claims 1 and 2, wherein the exhaust gas channel (2) has an end channel (5), wherein the exhaust gas in the end channel (5) is output into the surroundings, and wherein the at least one evaporator (30) is arranged in the end channel (5), **characterized in that** a torque of the internal combustion engine (1) is measured, and said torque is compared with a calculated torque.

10. Method for operating an arrangement for using waste heat (10) of an internal combustion engine (1), wherein the internal combustion engine (1) has an exhaust gas channel (2), and the arrangement for using waste heat (10) has a circuit (11) conducting a working medium, wherein a pump (20), at least one evaporator (30, 40), an expansion machine (50) and a condenser (60) are arranged in the direction of flow of the working medium in the circuit (11), wherein the at least one evaporator (30, 40) is also arranged in the exhaust gas channel (2), and wherein, in the at least one evaporator (30, 40), use is made of an exhaust gas output by the internal combustion engine as a heat source, and the working medium is thereby evaporated in the at least one evaporator (30, 40), wherein a leakage of the working medium within the at least one evaporator (30, 40) into the exhaust gas channel (2) is determined from a measured physical value, wherein the exhaust gas channel (2) has a return channel (4), wherein the exhaust gas in the return channel (4) is supplied to the internal combustion engine (1), and wherein the at least one evaporator (40) is arranged in the return channel (4), wherein a rotational speed of the internal combustion engine (1) is measured, and said rotational speed is compared with a calculated rotational speed, wherein the rotational speed of the internal combustion engine (1) is lower or greater than the calculated rotational speed, **characterized in that** a control device (100) detects the leakage if combustion of the working medium in the internal combustion engine (1) takes place at an early or at a late stage of the compression stroke.

## Revendications

1. Procédé pour faire fonctionner un agencement d'utilisation de chaleur perdue (10) d'un moteur à combustion interne (1), le moteur à combustion interne (1) présentant un conduit de gaz d'échappement (2) et l'agencement d'utilisation de chaleur perdue (10) présentant un circuit (11) conduisant un fluide de travail, une pompe (20), au moins un évaporateur (30, 40), une machine d'expansion (50) et un condenseur (60) étant disposés dans le circuit (11) dans la direction du flux du fluide de travail, l'au moins un évaporateur (30, 40) étant également disposé dans le conduit de gaz d'échappement (2) et un gaz d'échappement éjecté par le moteur à combustion interne dans l'au moins un évaporateur (30, 40) étant utilisé en tant que source de chaleur et le fluide de travail étant de ce fait évaporé dans l'au moins un évaporateur (30, 40), une fuite de fluide de travail à l'intérieur de l'au moins un évaporateur (30, 40) étant détectée dans le conduit de gaz d'échappement (2) à partir d'une valeur physique mesurée,
**caractérisé en ce que** la fuite est déterminée par le fait qu'un débit massique de gaz d'échappement dans le conduit de gaz d'échappement (2) après l'au moins un évaporateur (30, 40) est mesuré et celui-ci est comparé avec un débit massique calculé.

2. Procédé selon la revendication 1, **caractérisé en ce que** la fuite est déterminée par le fait qu'une température du fluide de travail dans le circuit (11) après l'au moins un évaporateur (30, 40) est mesurée, et celle-ci est comparée avec une température calculée.

3. Procédé selon l'une quelconque des revendications précédentes, dans lequel le conduit de gaz d'échappement (2) présente un conduit de retour (4), le gaz d'échappement dans le conduit de retour (4) étant acheminé au moteur à combustion interne (1), et l'au moins un évaporateur (40) étant disposé dans le canal de retour (4), **caractérisé en ce qu'**une température de gaz d'échappement dans le canal de retour (4) après l'au moins un évaporateur (40) est mesurée et celle-ci est comparée avec une température calculée.

4. Procédé selon l'une quelconque des revendications 1 ou 2, dans lequel le conduit de gaz d'échappement (2) présente un conduit de retour (4), le gaz d'échappement dans le conduit de retour (4) étant acheminé au moteur à combustion interne (1), et l'au moins un évaporateur (40) étant disposé dans le conduit de retour (4), **caractérisé en ce qu'**une pression de suralimentation dans le conduit de retour (4) après l'au moins un évaporateur (40) est mesurée et celle-ci est comparée avec une pression de suralimentation calculée.

5. Procédé selon l'une quelconque des revendications 1 ou 2, dans lequel le conduit de gaz d'échappement (2) présente un conduit de retour (4), le gaz d'échappement dans le conduit de retour (4) étant acheminé au moteur à combustion interne (1), et l'au moins un évaporateur (40) étant disposé dans le conduit de retour (4), **caractérisé en ce que** la composition du gaz d'échappement en ce qui concerne l'éjection d'oxyde d'azote et/ou la teneur en oxygène résiduel et/ou l'éjection de suie et/ou l'éjection d'hydrocarbures dans le conduit de gaz d'échappement (2) après le moteur à combustion interne (1) est mesurée et celle-ci est comparée avec une composition de gaz d'échappement calculée.

6. Procédé selon la revendication 5, dans lequel la composition du gaz d'échappement est déterminée par une sonde lambda disposée dans le conduit de gaz d'échappement.

7. Procédé selon l'une quelconque des revendications 1 ou 2, dans lequel le conduit de gaz d'échappement (2) présente un conduit de retour (4), le gaz d'échappement dans le conduit de retour (4) étant acheminé au moteur à combustion interne (1), et l'au moins un évaporateur (40) étant disposé dans le conduit de retour (4), **caractérisé en ce qu'**un couple du moteur à combustion interne (1) est mesuré et celui-ci est comparé avec un couple calculé.

8. Procédé selon l'une quelconque des revendications 1 ou 2, dans lequel le conduit de gaz d'échappement (2) présente un conduit de retour (4), le gaz d'échappement dans le conduit de retour (4) étant acheminé au moteur à combustion interne (1), l'au moins un évaporateur (40) étant disposé dans le conduit de retour (4) et le moteur à combustion interne (1) présentant une chambre de combustion, **caractérisé en ce qu'**une pression de cylindre dans la chambre de combustion est mesurée et celle-ci est comparée avec une pression de cylindre calculée.

9. Procédé selon l'une quelconque des revendications 1 ou 2, dans lequel le conduit de gaz d'échappement (2) présente un conduit d'extrémité (5), le gaz d'échappement dans le conduit d'extrémité (5) étant injecté dans l'environnement, et l'au moins un évaporateur (30) étant disposé dans le conduit d'extrémité (5), **caractérisé en ce qu'**un couple du moteur à combustion interne (1) est mesuré et celui-ci est comparé avec un couple calculé.

10. Procédé pour faire fonctionner un agencement d'utilisation de chaleur perdue (10) d'un moteur à combustion interne (1), le moteur à combustion interne (1) présentant un conduit de gaz d'échappement (2) et l'agencement d'utilisation de chaleur perdue (10) présentant un circuit (11) conduisant un fluide de travail, une pompe (20), au moins un évaporateur (30, 40), une machine d'expansion (50) et un condenseur (60) étant disposés dans le circuit (11) dans la direction du flux du fluide de travail, l'au moins un évaporateur (30, 40) étant également disposé dans le conduit de gaz d'échappement (2) et un gaz d'échappement éjecté par le moteur à combustion interne dans l'au moins un évaporateur (30, 40) étant utilisé en tant que source de chaleur et le fluide de travail étant de ce fait évaporé dans l'au moins un évaporateur (30, 40), une fuite de fluide de travail à l'intérieur de l'au moins un évaporateur (30, 40) étant détectée dans le conduit de gaz d'échappement (2) à partir d'une valeur physique mesurée,
le conduit de gaz d'échappement (2) présentant un conduit de retour (4), le gaz d'échappement dans le conduit de retour (4) étant acheminé au moteur à combustion interne (1), et l'au moins un évaporateur (40) étant disposé dans le conduit de retour (4), un régime du moteur à combustion interne (1) étant mesuré et celui-ci étant comparé avec un régime calculé, le régime du moteur à combustion interne (1) étant inférieur ou supérieur au régime calculé, **caractérisé en ce qu'**un appareil de commande (100) détecte la fuite lorsqu'une combustion du fluide de travail dans le moteur à combustion interne (1) s'effectue dans un stade avancé ou retardé du temps de compression.
